# EUROPEAN PATENT APPLICATION

(11) **EP 1 691 331 A1**
(43) Date of publication of application: **16.08.2006**
(21) Application number: 06250133.3
(22) Date of filing: 11.01.2006
(51) Int. Cl.: G06Q 30/00, H04M 3/53

(54) **A method of managing customer service sessions**

(30) Priority: 21.01.2005 CN 200510005625
(71) Applicant: LUCENT TECHNOLOGIES INC., Murray Hill, New Jersey 07974-0636 (US)
(72) Inventor: Huang, Dawei, Runcom Brisbane (AU); Qian, Ling, Yuanda Road Haidian District (CN)
(74) Representative: Sarup, David Alexander

(57) **Abstract**

The method manages, for example, a database to track customer service sessions over a plurality of communication media used by a customer.

## Description

### BACKGROUND OF THE INVENTION

### 1. Field of the Invention

The present invention relates to providing customer service.

### 2. Description of Related Art

Most will be familiar with the various customer, technical, etc. service (collectively referred to as "customer service" herein) approaches employed by enterprises. Besides the typical in-store customer service department, most enterprises provide customer service via phone (wireless and landline) and email. Customer service by phone often involves a lengthy voice response or tone response (pushing of buttons on the phone) interaction, before servicing can begin. With email, the return time of a response is random, and can often take days.

Instant messaging has become a new vehicle of choice for providing customer service. Unlike regular email, instant messaging allows for an interactive text session in real time. The lag between communications experienced with email can be eliminated. Also, the customer does not have to deal with the interactive phone menu barrier of the call based customer service system.

However, regardless of whether email, phone or instant messaging is used to provide customer service, customers still experience unwanted hassles. After an initial customer service session, customers often need to reconnect with the customer service department of the enterprise with follow-up questions, to deal with additional problems, or to continue work on a problem that was not solved as a result of the initial customer service session. In these instances, the customer is not necessarily reconnected with the same customer service agent from the previous customer service session. Additionally, when connected with a different customer service agent, or even the same customer service agent, there is no record or track of the previous customer service sessions. As a result, the customer must repeat his basic customer information, and then recount a history of the customer service sessions to date. Only then is the service agent in a position to move forward with the customer and provide the needed service.

### SUMMARY OF THE INVENTION

The present invention provides a methodology and architecture for managing the customer service provided to a given customer regardless of the customer service medium (e.g., email, call, instant messaging, etc.).

In one embodiment, the method of managing customer service, includes managing a database to track customer service sessions over a plurality of communication media used by a customer.

In the method, a service record information entry may be created in a database. The service recording information in the entry may include a service identifier, at least one customer identifier and at least one service agent identifier.

For example, the service identifier may include one or more character strings such as a number.

As examples, the customer identifier maybe a phone number, IP address, email address, etc. associated with a customer.

Also as examples, the service agent identifier may be a phone number, IP address, email address, etc. associated with a service agent.

In one embodiment, session information for a service session is stored in association with the service record information entry.

For example, the session information may be a recorded call with the customer, at least a portion of an email from the customer, at least a portion of an instant message chat log between the customer and a service agent, etc.

In an embodiment, a current customer service session is directed to a same customer agent as participated in a previous service session.

This may be accomplished by accessing a database including customer information and an identifier of a service agent with which the customer has previously communicated. The current customer communication is then routed to the service agent identified by the service agent identifier.

### BRIEF DESCRIPTION OF THE DRAWINGS

The present invention will become more fully understood from the detailed description given herein below and the accompanying drawings which are given by way of illustration only, wherein like reference numerals designate corresponding parts in the various drawings, and wherein:
Fig. 1 illustrates a general overview of a customer service architecture;
Fig. 2 illustrates a detailed block diagram of a customer service architecture according to an embodiment of the present invention; and
Fig. 3 illustrates a flow chart of a method of managing customer service sessions according to an embodiment of the present invention.

### DETAILED DESCRIPTION OF EMBODIMENTS

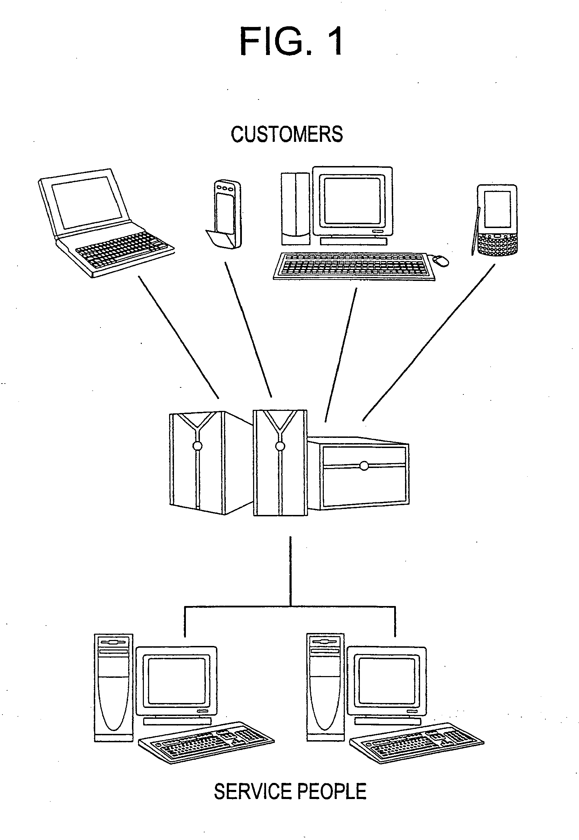

Fig. 1 illustrates a general overview of a customer service architecture. As depicted in Fig. 1, a customer may connect with service agents (service people) of an enterprise through a server system. As shown more specifically, the customer may connect by voice call such as with a wireless phone, landline phone, PDA, etc. Alternatively, the customer may connect by email using, for example, a computer, a wireless phone, a PDA, etc. Still further, the customer may connect by instant messaging (IM) using, for example, a computer, a wireless phone, a PDA, etc.

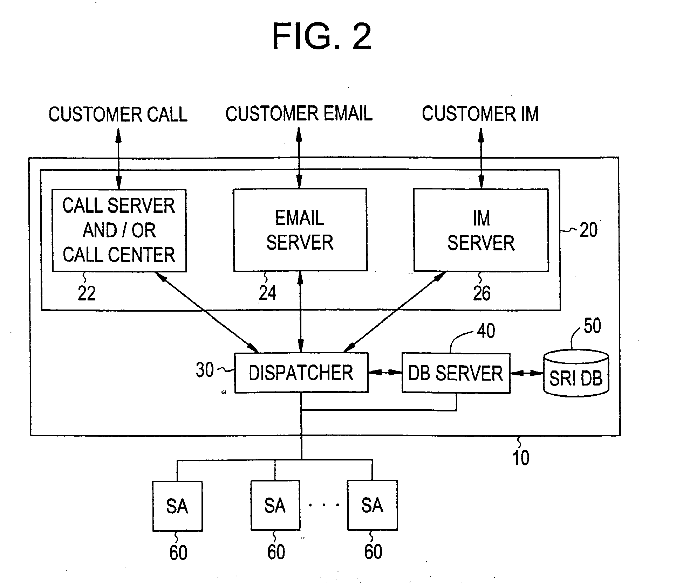

Fig. 2 illustrates a detailed block diagram of a customer service architecture according to an embodiment of the present invention. As shown, customers connect with a server system 10 of an enterprise via a call (wireless, landline, etc.), email or instant messaging. It will be appreciated that as new communication vehicles are established, the present invention may be readily adapted to include those new communication vehicles.

The server system 10 includes communication servers 20 to handle the different types of communication from customers. For example, the communication servers may include a call server 22 for handling the calls with customers, an email server 24 for handling email communication with customers, and an instant message server 26 for handling the instant message communication with customers. It will be appreciated that the call server 22 may employ, for example, an interactive voice recognition or tone recognition menu system. It will also be appreciated, that the call server 22 may instead be a call center with human operators, or a combination of a call server 22 and a call center.

When a customer communication is received, the communication servers 20 communicate with a dispatcher 30. The dispatcher 30 communicates with a database server 40 that manages a service record information database 50. Based on this line of communication, the dispatcher 30 routes the customer communication to a service agent 60 and, together with the database server 40, updates the service record information database 50.

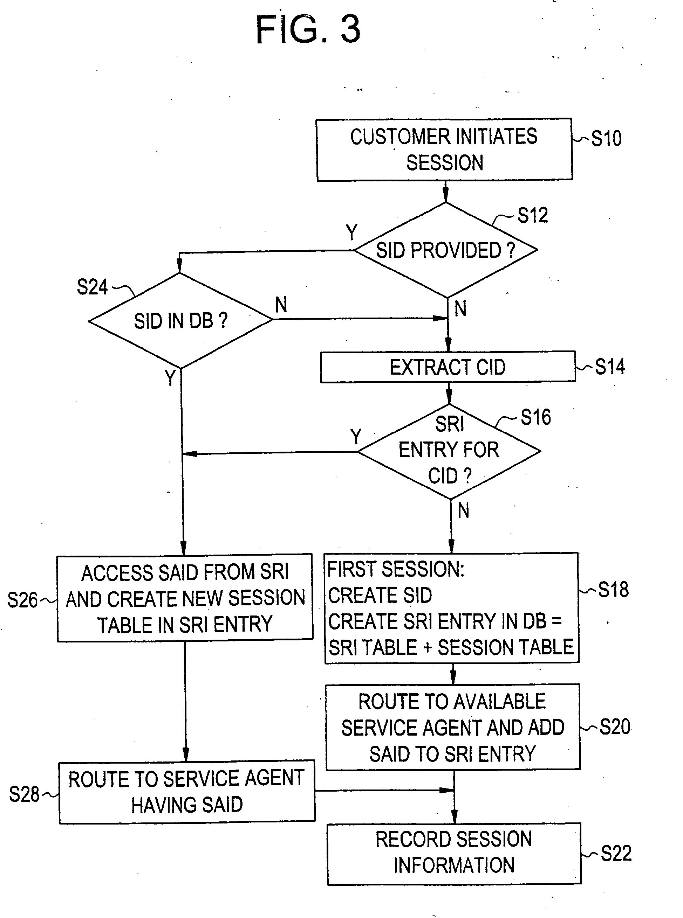

A method of managing customer service sessions according to an embodiment of the present invention will now be described with respect to Fig. 3. Fig. 3 illustrates a flow chart of a method of managing customer service sessions according to an embodiment of the present invention. It will be understood that the various functional elements of this methodology may be distributed about the system elements (e.g., communication servers 20, dispatcher 30, and database server 40) or cooperatively performed by the system elements based on the individual system designs developed by a system designer. Accordingly, while a particular function may be attributed to one or more of the system elements in the following description, it should be understood that the present invention is not necessarily limited to effecting a given function at that system element.

As shown in Fig. 3, in step S10 a customer initiates a session by, for example, calling, emailing or instant messaging. In step S12, the appropriate communication server 20 or dispatcher 30, through communication with the communication server 20, determines if the communication from the customer includes a service identifier (SID).

As will be discussed in detail below, the method of managing customer service according to this embodiment of the present invention associates a service identifier with servicing of a customer and uses the service identifier to manage customer service sessions. If this is a first or initial session, the customer will not have yet been assigned an SID; and therefore not know the SID. However, in subsequent sessions the customer may know and provide the SID.

In one embodiment the SID is character string such as a number (e.g., a type of int32). In another embodiment, the SID may be a keyword. In yet another embodiment, the SID may be the combination of a login and password. As will be appreciated, the SID may be designed to have many different forms.

Also, the customer initiating the service session may provide the SID in many different ways. When calling, the interactive voice recognition or tone recognition system may query the customer for the SID. When email is used, the SID may be given in the subject line or the body of the email. When instant messaging is used, the customer may provide the SID in the initial text, or be queried for the SID.

Returning to step S 12, if the SID is not provided, then in step S14, a customer identifier (CID) is extracted from the customer. For example, in a call, the customer identifier may be the calling party phone number, an IP address or softphone URI (Universal Resource Identifier) if the phone is a softphone (e.g., IP phone), etc. For email, the customer identifier may be the email address of the customer. Similarly, for instant messaging, the customer identifier may be the Instant Messaging User ID (in some Instant Messaging systems, this can be an email address) of the customer.

Based on the extracted CID, the dispatcher 30 and/or database server 40 determines if a service record information (SRI) entry exists in the service record information database 50 in step S16. As discussed in more detail below, a SRI entry will include, among other things, the SID and associated CID(s).

If a SRI entry does not exist, then in step S 18, the dispatcher 30 and/or database server 40 creates an SID according to an established protocol. For example, as discussed above, the SID may be generated as a number of type int32 that does not already exist as an SID in the database 50. A service record information entry is then created in the database 50 using the SID as an index. The created SRI entry will include a service record information table and session table.

The SRI table includes the SID, the CID or CIDs and a yet to be assigned service agent identifier (SAID). As will be appreciated, because the customer may use different communication media for each session, the SRI table may include more than one CID for the customer. Similarly, the SRI table may include more than one SAID for the service agent as will become apparent from the discussion of SAIDs below.

The session table is associated with the SRI table and is applicable to this session. The session table will include the session information for this session. For example, the session table may include voice files of the recorded session when the customer communicates by, for example, phone; a log of the emails if the customer communicates by email; and a chat log if the customer communicates by instant messaging.

The dispatcher 30 then routes the customer communication to an available service agent in step S20, and records the SAID of the service agent in the SRI table of the SRI entry. For example, the SAID may be the softphone extension of the service agent, the IP address of the service agent, the email address of the service agent, etc. The session information discussed above is then recorded in the session table in step S22 as the customer and the service agent communicate.

Returning to step S12, if the customer does provide an SID, then in step S24, it is determined whether the SID exists in the database 50. If not, processing proceeds to step S14 discussed above. However, if the SID does exist in the database 50, then processing proceeds to step S26. Similarly, if in step S16, it is determined that an SRI entry exits in the database 50 based on the extracted CID, then processing proceeds to step S26.

In step S26, the SRI entry associated with the SID or CID is accessed. More specifically, the SRI table in the SRI entry is accessed, and the SAID in the SRI table is obtained. A new session table is then created in association with the SRI entry. And, in step S28, the dispatcher 30 routes the customer to the service agent identified by the SAID in step S28.

Following step S28, the session information for the new session is recorded in the new session table in step S22. In general, it is expected that the service agent will remember previously dealing with the customer, and begin providing service. Even if the service agent does not immediately remember the customer or the issue at hand, the service agent has access to the information in the SRI database 50 and can quickly refresh their recollection using the service record information. For example, the service agent may review the session table information in the one or more session tables that exist in the SRI entry for that customer.

Accordingly, the present invention provides a method of managing customer service regardless of the medium that the customer chooses for a given customer service session. Namely, the customer may choose a different medium (e.g., IM instead of a phone call) for different sessions on an ongoing issue. The method of the present invention; however, provides for tracking the customer service history regardless of the customer service medium option chosen. As such, the present invention provides a powerful and efficient customer service tool for enterprises.

The invention being thus described, it will be obvious that the same may be varied in many ways. For example, the customer may be given the option to choose a different customer agent instead of being routed to the same customer agent from a previous session. Such variations are not to be regarded as a departure from the spirit and scope of the invention, and all such modifications are intended to be included within the scope of the present invention.

## Claims

1. A method of managing customer service, comprising:
managing a database (50) to track customer service sessions over a plurality of communication media used by a customer.

2. The method of claim 1, wherein the managing step comprises:
creating a service record information entry in the database that includes a service identifier, at least one customer identifier and at least one service agent identifier.

3. The method of claim 2, wherein the customer identifier is a phone number, IP address, or softphone URI of the customer.

4. The method of claim 2, wherein the customer identifier is an email address or Instant Messaging User ID of the customer.

5. The method of claim 2, wherein the service agent identifier is a phone number, IP address, or softphone URI of the service agent.

6. The method of claim 2, wherein the service agent identifier is an email address, or Instant Messaging User ID of the service agent.

7. The method of claim 1, wherein the managing step comprises:
storing session information for a service session in association with the service record information entry.

8. The method of claim 7, wherein the session information is one of a recorded call, at least a portion of an email from the customer, and at least a portion of a instant message chat log between the customer and a service agent.

9. The method of claim 8, wherein the managing step comprises:
updating the service record information entry to include new session information for each service session with the customer.

10. A method of managing customer service, comprising:
directing a current customer service session to a same customer agent as participated in a previous service session;
accessing a database (50) including customer information and an identifier of a service agent with which the customer has previously communicated; and
the directing step routes a current customer communication to the service agent identified by the service agent identifier.
